# EUROPÄISCHE PATENTSCHRIFT

(11) **EP 3 738 751 B1**
(45) Veröffentlichungstag und Bekanntmachung des Hinweises auf die Patenterteilung: **21.06.2023**
(21) Anmeldenummer: 20171557.0
(22) Anmeldetag: 27.04.2020
(51) Int. Cl.: B29C 65/00, B29C 69/00, B65B 47/00, B65D 65/46, B65D 81/32, C11D 17/04, B65B 11/50, B65B 51/14, B29C 51/26, B29C 65/02, B29C 51/08, B29K 29/00

(54) **VERFAHREN ZUR HERSTELLUNG EINER PORTIONSEINHEIT EINES WASCHMITTELS UND PORTIONSEINHEIT**
A PORTION UNIT AND METHOD OF MANUFACTURING A PORTION UNIT OF A WASHING AGENT
PROCÉDÉ DE FABRICATION D'UNE PORTION UNITAIRE D'UN DÉTERGENT ET PORTION UNITAIRE

(30) Priorität: 16.05.2019 DE 102019207162
(43) Veröffentlichungstag der Anmeldung: 18.11.2020
(73) Patentinhaber: Henkel AG & Co. KGaA, 40589 Düsseldorf (DE)
(72) Erfinder: Meier, Frank, 40589 Düsseldorf (DE); Sunder, Matthias, 40593 Düsseldorf (DE)

(56) Entgegenhaltungen:
- EP-A1- 3 025 848
- WO-A1-2016/055346

## Beschreibung

Die Erfindung betrifft ein Verfahren zur Herstellung einer Portionseinheit eines Waschmittels, üblicherweise auch als Waschmittelbeutel, Waschmittelpouch, Caps oder Pods bezeichnet. Derartige Portionseinheiten umfassen üblicherweise eine aus einer wasserlöslichen Folie gebildete Hülle, die ein Aufnahmevolumen umgrenzt, in welchem eine Waschmittelzusammensetzung bzw. deren Komponenten in flüssiger, gelförmiger oder fester bzw. pulverförmiger Konsistenz in der gewünschten Dosierung für einen Waschvorgang in Kammern aufgenommen sind. Bei Kontakt mit dem Waschwasser löst sich die Folie auf und gibt das Waschmittel bzw. die Waschmittelkomponenten frei.

Übliche Ausführungsformen derartiger Portionseinheiten sind entweder mit nur einer einzigen Kammer als Monopouch bzw. Monocap oder unterteilt in mehrere Kammern als Mehrkammerpouch bzw. -cap (bspw. Duo-Caps) ausgeführt. Bei letzteren ist in jeder Kammer eine Komponente der Waschmittelzusammensetzung aufgenommen, wobei es sich um gleiche oder unterschiedliche Komponenten handeln kann.

Die vorliegende Erfindung betrifft das Gebiet derartiger mehrere Kammern umfassender Portionseinheiten.

Die Herstellung der Portionseinheiten erfolgt üblicherweise auf speziellen Tiefzieh-Verpackungsmaschinen, umfassend die folgenden Schritte:
- Einlegen eines Bodenelements aus einem ersten wasserlöslichen Folienabschnitt in eine Tiefziehform mit mindestens einer Kavität unter Ausbildung eines Aufnahmevolumens aus dem ersten wasserlöslichen Folienabschnitt, wobei das Aufnahmevolumen mehrere Kammern umfasst, die voneinander beabstandet sind;
- Einfüllen einer oder mehrerer Waschmittelzusammensetzung in die Kammern,
- Auflegen eines Deckelelements aus einem zweiten wasserlöslichen Folienabschnitt auf die befüllten Kammern,
- Verbinden des Deckelelements mit dem Bodenelement unter Einschluss der Kammern zu einer Folienhülle, wobei zwischen benachbarten Wandabschnitten der Kammern Siegelnähte ausgebildet werden, in denen Bereiche des Boden- und Deckelelements unmittelbar aufeinanderliegend miteinander verbunden werden,
- Herausnehmen der Portionseinheit aus der Tiefziehform.

Solchen mehrkammerigen Portionseinheiten, beispielsweise befüllt mit Flüssigwaschmittel, kommt eine immer stärkere Bedeutung im Markt zu, da die Verbraucher diese modernen mehrkammerigen Portionseinheiten höher bewerten als zum Beispiel einkammerige Portionseinheiten. Allerdings weisen mehrkammerige Portionseinheiten bei gleicher aufgenommener Waschmittelmenge im Vergleich zu einkammerigen Portionseinheiten im Allgemeinen einen höheren Verbrauch an eingesetzter wasserlöslicher Folie zur Ausbildung der äußeren Hülle auf. Dies liegt unter anderem daran, dass bei manchen Ausführungsformen die Kammern nicht nur nebeneinander, sondern auch übereinander angeordnet sind, wodurch ein dritter Folienabschnitt erforderlich wird. Bei anderen Ausführungsformen liegen die Kammern nebeneinander, weisen jedoch häufig komplexe Konturen mit breiten Siegelnähten zwischen den einzelnen Kammern auf. Dies führt dazu, dass der Folienverbrauch bei mehrkammerigen Portionseinheiten im Vergleich zu einkammerigen Portionseinheiten bei gleicher aufgenommener Waschmittelmenge in ml oder g um etwa 10-50 % höher ausfällt.

Bei den Ausführungsformen mit nebeneinander angeordneten Kammern besteht darüber hinaus ein weiterer Nachteil darin, dass diese eine vergleichsweise große Grundfläche beanspruchen und die Siegelnähte zwischen den benachbarten Kammern deutlich sichtbar sind. Aufgrund des unweigerlich eintretenden - mehr oder weniger ausgeprägten - Scharniereffektes verursachen diese Siegelnähte eine unerwünscht große Verringerung der Eigenstabilität derartiger mehrkammeriger Portionseinheiten.

Schließlich ist für den Verbraucher eine unerwünscht große Menge an Kunststoffmaterial zwischen den einzelnen Kammern sichtbar, was häufig Bedenken gegenüber der Wasserlöslichkeit der verwendeten Folienhülle hervorruft.

Es besteht von daher ein Bedürfnis nach mehrkammerigen Portionseinheiten mit deutlich verringerter Breite der Siegelnähte zwischen den einzelnen voneinander getrennten Kammern, um auf diese Weise kompakte Portionseinheiten mit hoher struktureller Integrität und hervorragenden Eigenschaften z.B. in der Abfüll- und Verpackungslinie zu erhalten. Solche kompakte und formstabile Portionseinheiten lassen sich einfacher und mit höherer Geschwindigkeit verpacken und handhaben, wobei auch die Verkaufsverpackung für den Verbraucher kompakter ausfallen kann.

Aus der EP 3 025 848 A1 geht ein Verfahren zur Herstellung eines wasserlöslichen Beutels hervor, wobei eine Form mit zwei Hohlräumen bereitgestellt und eine Folie in beide Hohlräume tiefgezogen wird.

Die WO 2016/055346 A1 offenbart eine folienverpackte Mittelportion mit mindestens einem Kompartiment zur Aufnahme des Mittels, wobei das mindestens eine Kompartiment durch wenigstens einen Folien-Deckelteil und wenigstens einen Folien-Topfteil ausgebildet wird. Aufgabe der Erfindung ist es daher, ein Verfahren der eingangs genannten Art dahingehend weiterzubilden, dass besonders kompakte und formstabile mehrkammerige Portionseinheiten eines Waschmittels mit deutlich verringerter Breite der Siegelnähte erhalten werden.

Zur Lösung der gestellten Aufgabe wird erfindungsgemäß die Ausgestaltung des Verfahrens mit den Merkmalen des Patentanspruchs 1 vorgeschlagen.

Eine erfindungsgemäße Portionseinheit ist Gegenstand des Patentanspruches 9.

Vorteilhafte Weiterbildungen der Erfindung sind Gegenstand der abhängigen Ansprüche.

Die Erfindung schlägt vor, dass im Anschluss an Herstellung der Portionseinheit, d. h. nach dem Herausnehmen aus der Tiefziehform, die Folienhülle der Portionseinheit zumindest im Bereich der benachbarten Wandabschnitte außenseitig befeuchtet wird und durch Ausübung von Druck die Siegelnähte komprimiert und die benachbarten Wandabschnitte aneinander zur Anlage gebracht und miteinander verbunden werden.

Das erfindungsgemäße Befeuchten der Folienhülle kann zum Beispiel an zumindest einer Seite der einander zugewandten benachbarten Wandabschnitte, z.B. auf der vom Bodenelement gebildeten Seite, durchgeführt werden, jedoch kann dies vom Fachmann beliebig ausgewählt werden.

Durch das erfindungsgemäße Befeuchten der wasserlöslichen Folienhülle bildet diese eine klebrige Oberfläche aus, sodass durch das anschließende Ausüben von Druck die aneinander zur Anlage gebrachten benachbarten Wandbereiche miteinander nach Art einer Klebeverbindung verbunden werden und die dazwischen liegende komprimierte Siegelnaht in dieser komprimierten Position fixiert wird. Mit anderen Worten dient das im Rahmen des Befeuchtens auf der Oberfläche der wasserlöslichen Folie aufgebrachte Wasser als Klebemittel, wie es beispielsweise auch zum Verbinden des Boden- und Deckelelements beim Herstellen der geschlossenen Folienhülle der Portionseinheit genutzt wird.

Im Ergebnis wird eine Portionseinheit erhalten, die im Bereich der zunächst notwendigen Siegelnähte zwischen benachbarten, aber voneinander getrennten Kammern komprimiert ist, wobei die an die komprimierte Siegelnaht angrenzenden und aneinander anliegenden benachbarten Wandflächen der Kammern haftfest miteinander verbunden sind.

Es versteht sich, dass je nach Ausführungsform der Portionseinheit eine Siegelnaht zwischen zwei Kammern, mehrere Siegelnähte zwischen mehreren Kammern oder alle Siegelnähte zwischen allen Kammern in der erfindungsgemäßen Weise komprimiert werden können. Dabei wird das gesamte Design und die Anordnung der Kammern der Portionseinheit nicht verändert, es werden lediglich die Siegelnähte in ihrer räumlichen Ausdehnung verringert oder idealerweise vollständig eliminiert und benachbarte Wandflächen der Kammern aneinandergefügt und miteinander verbunden.

Das Befeuchten der Folienhülle kann beispielsweise durch Aufsprühen von einem Lösungsmittel wie beispielsweise Wasser, durch Aufbringen eines Wassernebels oder Applikation von Wasserdampf bewirkt werden. Auch kann ein Wasserfilm mittels eines Druckkopfes, Stempels, feuchten Walzen oder feuchten Bürsten zum Beispiel entlang einer Förderstrecke für die hergestellten Portionseinheiten aufgebracht werden. Bei dem Wasser kann es sich beispielsweise um vollentsalztes Wasser als auch um eine wässrige Lösung von Salzen oder Polymeren (PVA, Polyacrylate, PVP) handeln. Weiterhin kann die wässrige Lösung optional Biozide, Bitterstoffe oder Farbstoffe enthalten. Auch kann das Lösungsmittel punktförmig aufgetragen werden.

Die im Rahmen des erfindungsgemäßen Verfahrens hergestellten Portionseinheiten können vorteilhaft zwischen 2 und 10 Kammern, vorzugsweise 2 bis 5 Kammern aufweisen, die beliebig zueinander angeordnet sein können.

Nach einem Vorschlag der Erfindung weisen benachbarte Kammern an ihren einander zugewandten und an die jeweilige Siegelnaht angrenzenden benachbarten Wandabschnitten zueinander komplementäre konvexe und konkave Flächen, vorzugsweise mindestens eine solche konvexe und konkave Fläche auf, sodass beim Kompaktieren aufgrund der Druckausübung ein Formschluss bzw. eine Verzahnung zwischen den benachbarten Kammern bewirkt wird, die die Gesamtfestigkeit der Portionseinheit positiv beeinflusst.

Nach einem weiteren Vorschlag der Erfindung werden die Siegelnähte von einer ursprünglichen Anfangsbreite zwischen 1,5 bis 10 mm auf eine sichtbare Endbreite zwischen 0 und 5 mm komprimiert.

Die wasserlöslichen Folienabschnitte des Boden- und Deckelelements zur Ausbildung der Folienhülle werden vorzugsweise auf Basis von Polyvinylalkohol bzw. aus PolyvinylalkoholCopolymeren mit entsprechenden Zuschlagstoffen wie Weichmachern, Tensiden, Bitterstoffen oder Salzen gebildet.

Eine solche Kunststofffolie kann beispielsweise im Gießverfahren (Solvent-Casting) oder Blas-Extrusionsverfahren hergestellt werden. Die Kunststofffolie kann ferner ein- oder mehrschichtig, beispielsweise zweischichtig ausgebildet sein. Die Folie kann optional innenliegend oder außenliegend bedruckt oder dekoriert sein, bspw. mit Verbraucherhinweisen und Piktogrammen. Der Druck kann mehrfarbig sein und es können wasserlösliche oder wasserunlösliche Druckfarben verwendet werden.

Das Bodenelement und das Deckelelement werden nach einem Vorschlag der Erfindung entweder lediglich unter Einwirkung von Wasser und Druck oder unter Einwirkung von Wasser, Druck und eine Erwärmung auf Temperaturen unterhalb 95 °C zu der Folienhülle miteinander verbunden, wobei diese Verbindung sowohl entlang der äußeren Begrenzungsränder der Portionseinheit als auch zwischen den benachbarten Kammern im Bereich der Siegelnähte erfolgt. Alternativ kann die Verbindung auch lediglich durch Einwirkung von Temperaturen oberhalb von 90 °C bewirkt werden.

Der Druck zum Komprimieren der Siegelnähte kann auf vielfältige Weise auf die Portionseinheit nach deren Herstellung und Befeuchten der Folienhülle ausgeübt werden. Beispielsweise können bewegliche Pressflächen vorgesehen sein, die von außen auf die Portionseinheiten einwirken, beispielsweise als Teil eines Greifarms, der die Portionseinheit auch anheben und transportieren kann. Ebenso können die Portionseinheiten nach dem Befeuchten der Folienhülle entlang einer sich verengenden Förderstrecke geführt werden, entlang derer sie aufgrund der Verengung von außen einwirkende Druckkräfte erfahren, die die Siegelnähte in der gewünschten Weise komprimieren und die benachbarten Wandflächen der Kammern aneinander zur Anlage bringen. Auch ist es möglich, in einem Druckbehälter entsprechenden Überdruck auf die Portionseinheit auszuüben, um die Siegelnähte in der beschriebenen Weise zu komprimieren. Sobald die benachbarten Wandflächen infolge der Druckausübung aneinander anliegen, verbinden sie sich aufgrund der durch die Befeuchtung klebrigen Oberfläche der Folienhülle in diesem Bereich und die zuvor vorhandenen Siegelnähte sind in der Aufsicht auf die Portionseinheit mindestens teilweise verschwunden beziehungsweise nicht offensichtlich zu erkennen.

Die im Rahmen des erfindungsgemäßen Verfahrens erhaltenen Portionseinheiten mit komprimierten Siegelnähten und haftfester Verbindung zwischen benachbarten Wandabschnitten der benachbarten Kammern weisen eine verbesserte Erscheinung auf, da sie formstabiler sind und keine als Scharnier wirkenden Siegelnähte mehr aufweisen.

Die erfindungsgemäßen Caps zeichnen sich darüber hinaus durch eine sehr kompakte Erscheinung mit deutlich reduzierten sichtbaren Kunststoffverbindungen zwischen den einzelnen nach wie vor getrennten Kammern aus.

Die solchermaßen kompaktierten Portionseinheiten erleichtern das Abpacken und das Volumen der zum Abpacken verwendeten Behälter kann bei gleichbleibender Menge der verpackten Portionseinheiten verringert werden.

Die kompaktere Form der Caps wirkt sich positiv beim Verpacken, beispielsweise dem Abwurf in die Verpackungen, üblicherweise Plastikcontainer oder flexible Standbodenbeutel aus. Vorteilhaft ist einerseits die kompaktere Form, bei gleicher Verpackungsgröße können mehr Waschmittelportionsbeutel eingefüllt werden, da der Raumbedarf jedes einzelnen Caps geringer ist. Dies leistet einen Beitrag zur Nachhaltigkeit. Zudem führt die verbesserte intrinsische Steifigkeit der Caps dazu, dass eine bessere Stapelung in der Verpackung erzielt werden kann und die Neigung zur Bildung von Abwurfkegeln, welche oben aus der Packung herausragen, reduziert wird. Diese Abwurfkegel können ein Auflegen des Deckels bei Plastikcontainers, bzw. ein Versiegeln der Folien bei Standbodenbeuteln stören, gar unmöglich machen, da Caps zerquetsch würden.

Weitere Ausgestaltungen und Einzelheiten der Erfindung werden nachfolgend anhand von Ausführungsbeispielen in der Zeichnung erläutert. Es zeigen:
Figur 1 die Aufsicht auf eine erste Ausführungsform einer Portionseinheit unmittelbar nach der Herstellung und vor der Komprimierung der Siegelnähte;
Figur 2 die Aufsicht auf die Portionseinheit gemäß Figur 1 nach der Komprimierung der Siegelnähte;
Figur 3 die Aufsicht auf eine zweite Ausführungsform einer Portionseinheit unmittelbar nach der Herstellung und vor der Komprimierung der Siegelnähte;
Figur 4 die Aufsicht auf die Portionseinheit gemäß Figur 3 nach der Komprimierung der Siegelnähte.

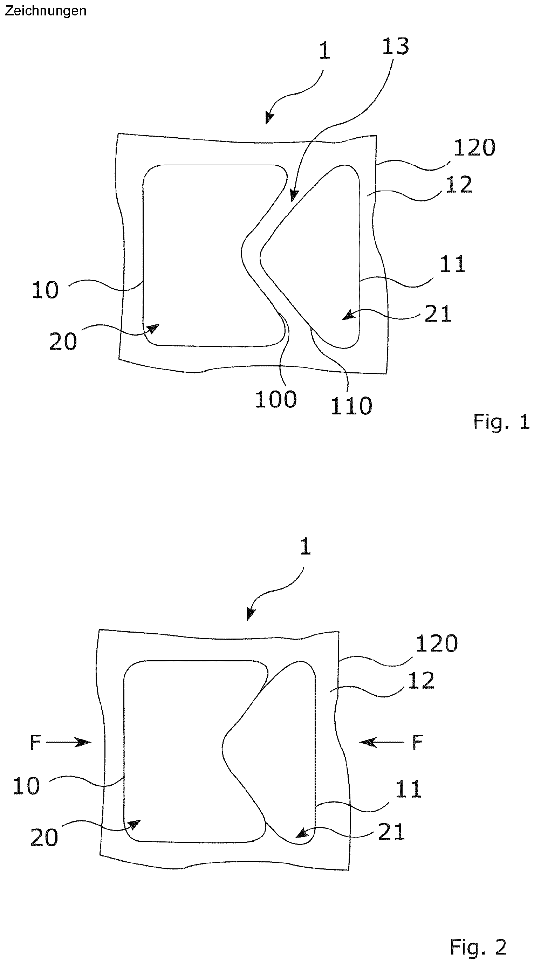

Aus der Figur 1 ist eine Ausführungsform einer Portionseinheit 1 eines Waschmittels dargestellt, die eine erste Kammer 10 und eine benachbarte weitere Kammer 11 umfasst, welche gemeinsam das Aufnahmevolumen der Portionseinheit 1 bilden und von einer wasserlöslichen Folienhülle (120) umhüllt sind. Solche Portionseinheiten 1 werden in an sich bekannter Weise gebildet, indem ein Bodenelement aus einem ersten wasserlöslichen Folienabschnitt, zum Beispiel auf Basis von Polyvinylalkohol, in eine nicht dargestellte Tiefziehform mit zwei Kavitäten eingelegt wird, die den späteren Kammern 10, 11 entsprechen, sodass die Kavitäten mit dem Bodenelement ausgekleidet werden. Sodann werden die mit dem Bodenelement ausgekleideten Kavitäten mit den den Kammern 10, 11 zugedachten Waschmittelkomponenten 20, 21 befüllt, die beispielsweise flüssig, gelförmig oder auch pulverförmig/fest vorliegen können, und zwar in der für einen Waschvorgang berechneten Dosierung.

Anschließend wird ein Deckelelement aus einem zweiten wasserlöslichen Folienabschnitt, zum Beispiel ebenfalls auf Basis von Polyvinylalkohol, auf die solchermaßen befüllten Kammern 10, 11 aufgelegt und das Deckelelement mit dem Bodenelement unter Einschluss der Kammern 10, 11 zu der Folienhülle 120 verbunden, beispielsweise durch Aufbringen von Wasser, Druck und eine Erwärmung auf Temperaturen unterhalb 90 °C, durch Aufbringen von Temperaturen oberhalb 90 °C oder lediglich unter Einwirkung von Wasser und Druck.

Es bildet sich eine umlaufende Randnaht 12, die bei Bedarf zum Beispiel mittels Laser beschnitten werden kann sowie eine Siegelnaht 13 zwischen den beiden Kammern 10, 11, der diese voneinander abteilt. Sowohl in der Randnaht 12 als auch im Bereich der Siegelnaht 13 liegen die Folienabschnitte des Bodenelements als auch des Deckelelements unmittelbar aufeinander und werden abdichtend miteinander zu der Folienhülle 120 verbunden. Die Abmessungen sind aus der eingeblendeten Skala ersichtlich.

Die einzelnen Kammern 10, 11 sind damit vollständig und jeweils getrennt voneinander von der geschlossenen Folienhülle 120 umhüllt, wobei sie angrenzend an die Siegelnaht 13 zwei mit Bezugszeichen 100, 110 gekennzeichnete benachbarte, aber durch die Siegelnaht 13 beabstandete Wandabschnitte aufweisen.

Demgegenüber zeigt die Figur 2 die Portionseinheit 1 gemäß Figur 1 in einem Endzustand, in welchem die Siegelnaht 13 zwischen den Kammern 10, 11 durch vorübergehende Ausübung von Druckkräften gemäß Pfeilen F vollständig komprimiert worden ist, sodass sie nicht mehr sichtbar ist. Dies ist darauf zurückzuführen, dass infolge der Druckausübung in Pfeilrichtung F die in Fig. 1 noch voneinander beabstandeten benachbarten Wandabschnitte 100, 110 der Kammern 10, 11 aufgrund der Komprimierung der Siegelnaht 13 aneinander anliegen und in dieser Position haftfest miteinander verbunden sind, wodurch sich auch die räumliche Ausdehnung der Portionseinheit entsprechend verringert hat, wie aus der eingeblendeten Skala im Vergleich zur Figur 1 unmittelbar abzulesen ist.

Zu diesem Zweck wurden die an die Siegelnaht 13 angrenzenden Wandabschnitte 100, 120 in einem nachgeordneten Arbeitsschritt nach dem Herausnehmen der aus der Figur 1 ersichtlichen Portionseinheit 1 aus der Tiefziehform befeuchtet, zum Beispiel durch Einwirkung von Wasserdampf auf die Außenseite der Folienhülle 120. Dies bewirkt eine infolge der Befeuchtung klebrige Oberfläche der aus wasserlöslicher Folie hergestellten Folienhülle im Bereich der Wandflächen 100, 110 angrenzend an die Siegelnaht 13. Die Befeuchtung ist in jedem Fall so gering gehalten, dass sie lediglich die gewünschte klebrige Oberfläche hervorruft, nicht jedoch die vollständige oder punktuelle Auflösung der Folienhülle 120.

Wenn nun zum Beispiel infolge der Förderung der Portionseinheit 1 entlang einer sich verengenden Förderstrecke die Druckkräfte gemäß Pfeil F aufgebracht werden, wird die Siegelnaht 13 komprimiert und die Wandflächen 100, 110 kommen aneinander zur Anlage. Die infolge der zuvor bewirkten Befeuchtung klebrigen Oberflächen bewirken eine haftfeste Klebeverbindung der aneinander zur Anlage kommenden Wandflächen 100, 110 in der aus Figur 2 ersichtlichen Konfiguration, die die Portionseinheit 1 sodann dauerhaft beibehält. Da überdies die Wandflächen 100, 110 einander zugewandte konvexe und konkave Flächen aufweisen, werden diese in der in der Figur 2 gekennzeichneten Konfiguration formschlüssig miteinander verzahnt, was sich in einer besonderen Festigkeit der kompakteren Portionseinheit 1 gemäß Figur 2 niederschlägt. Darüber hinaus wird eine Verringerung der Oberfläche von etwa 8 % gegenüber der Ausgangskonfiguration gemäß Figur 1 erreicht.

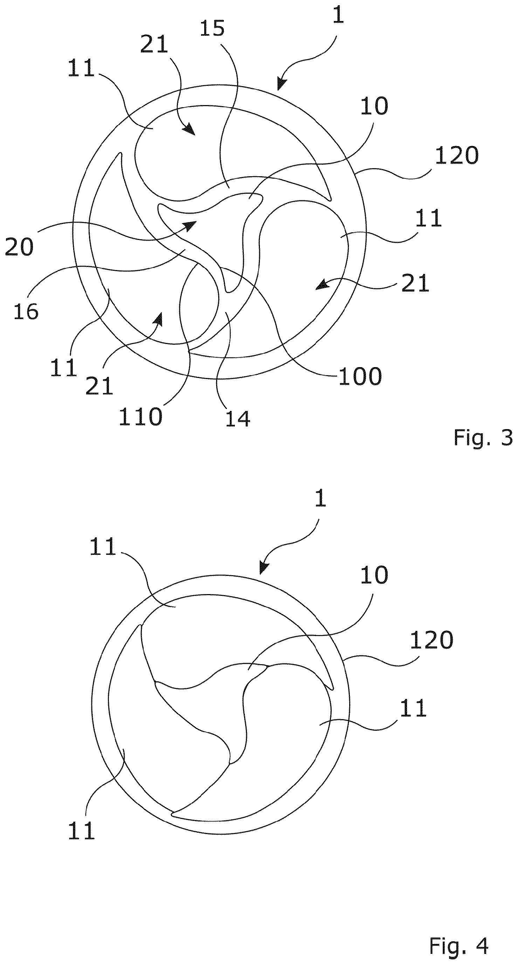

In gleicher Weise zeigen die Figuren 3 und 4 eine weitere Ausführungsform einer Portionseinheit 1, bei der eine zentrale Kammer 10 von insgesamt 3 weiteren Kammern 11 in einer gemeinsamen Ebene umgeben ist, die mit einer Komponenten 20, 21 einer Waschmittelzusammensetzung befüllt sind. In der Konfiguration unmittelbar nach der Herstellung der Portionseinheit 1 gemäß Figur 3 sind somit zwischen den Kammern 10, 11 insgesamt drei Siegelnähte 14, 15, 16 ausgebildet, an die Wandflächen 100, 110 der einander benachbarten Kammern 10, 11 angrenzen. Ferner weist die Portionseinheit im Bereich der äußeren Folienhülle auch eine umlaufende Randnaht 12 auf.

Auch bei dieser Ausführungsform der Portionseinheit 1 gemäß Figur 3 wird anschließend die Folienhülle 120 z.B. im Bereich der an die Siegelnähte 14, 15, 16 angrenzenden Wandflächen 100, 110 der Kammern 10, 11 befeuchtet, um eine klebrige Oberfläche der benachbarten Wandflächen 100, 110 zu erzeugen. Anschließend werden durch radial nach innen gerichtete Krafteinwirkung die Siegelnähte 14, 15, 16 komprimiert und die entsprechenden Wandflächen 100, 110 aneinander zur Anlage gebracht, sodass sich die kompakte Konfiguration gemäß Figur 4 ergibt, in welcher die Siegelnähte 14,15, 16 weitgehend eliminiert sind und benachbarte Wandflächen 100, 110 der Kammern 10, 11 aneinander anliegend miteinander durch oberflächliches Verkleben verbunden sind.

Aus einem Vergleich mit der Figur 3 ist die Verringerung der Gesamtoberfläche der Portionseinheit 1 ersichtlich, sie beträgt im dargestellten Beispiel etwa 12 %.

Darüber hinaus wird durch diese Krafteinwirkung auch der Innendruck der Kammer 10 optimiert, was zu einem verbesserten optischen Erscheinungsbild sowie besserer Stabilität der Portionseinheit 1 führt.

Es versteht sich, dass die vorangehend erläuterte Kompaktierung im Bereich der Siegelnähte 13, 14, 15, 16 und Verbindung der benachbarten Wandflächen 100, 110 auch bei beliebigen anderen mehrkammerigen Portionseinheiten 1 bewirkt werden kann.

Es können sowohl ausgewählte Oberflächenbereiche der Folienhülle 120 wie auch die gesamte Folienhülle 120 befeuchtet werden, um anschließend die angrenzenden Wandflächen 100, 110 der Kammern 10, 11 aneinander zur Anlage zu bringen und zu verbinden, wodurch die Siegelnähte 13, 14, 15, 16 optisch nicht mehr oder nur noch stark vermindert wahrnehmbar sind.

### Bezugszeichenliste:

- 1: Portionseinheit
- 10: Kammer
- 11: weitere Kammer
- 12: Randnaht
- 13: Siegelnaht
- 14: Siegelnaht
- 15: Siegelnaht
- 16: Siegelnaht
- 20: Waschmittelkomponente
- 21: Waschmittelkomponente
- 100: Wandfläche
- 110: Wandfläche
- 120: Folienhülle
- F: Kraftpfeil

## Patentansprüche

1. Verfahren zur Herstellung einer Portionseinheit (1) eines Waschmittels, umfassend die folgenden Schritte:
- Einlegen eines Bodenelements aus einem ersten wasserlöslichen Folienabschnitt in eine Tiefziehform unter Ausbildung eines Aufnahmevolumens aus dem ersten wasserlöslichen Folienabschnitt, wobei das Aufnahmevolumen mehrere Kammern (10, 11) umfasst, die voneinander beabstandet sind;
- Einfüllen mindestens einer Waschmittelzusammensetzung (20, 21) in die Kammern (10, 11),
- Auflegen eines Deckelelements aus einem zweiten wasserlöslichen Folienabschnitt auf die befüllten Kammern (10, 11),
- Verbinden des Deckelelements mit dem Bodenelement unter Einschluss der Kammern (10, 11) zu einer Folienhülle (120), wobei zwischen benachbarten Wandabschnitten (100, 110) der Kammern (10, 11) Siegelnähte (13, 14, 15, 16) ausgebildet werden,
- Herausnehmen der Portionseinheit (1) aus der Tiefziehform,
**dadurch gekennzeichnet, dass** nachfolgend zumindest im Bereich der benachbarten Wandabschnitte (100, 110) die Folienhülle (120) außenseitig befeuchtet wird und durch Ausübung von Druck die Siegelnähte (13, 14, 15, 16) komprimiert und die benachbarten Wandabschnitte (100, 110) aneinander zur Anlage gebracht und miteinander verbunden werden.

2. Verfahren nach Anspruch 1, **dadurch gekennzeichnet, dass** das Befeuchten der Folienhülle (120) mittels Aufsprühen von Lösungsmittel, vorzugsweise Wasser oder eine wässrige Lösung, Aufbringen eines Lösungsmittelnebels oder Aufbringen von Wasserdampf oder Aufbringen eines Flüssigkeitsfilms mittels eines Stempels, feuchten Walzen oder feuchten Bürsten bewirkt wird.

3. Verfahren nach Anspruch 1 oder 2, **dadurch gekennzeichnet, dass** die Portionseinheit (1) zwei bis zehn Kammern (10, 11) aufweist.

4. Verfahren nach einem der Ansprüche 1 bis 3, **dadurch gekennzeichnet, dass** benachbarte Kammern (10, 11) zueinander komplementäre konvexe und konkave Wandabschnitte (100, 110) aufweisen.

5. Verfahren nach einem der Ansprüche 1 bis 4, **dadurch gekennzeichnet, dass** die Siegelnähte (13, 14, 15, 16) von einer Anfangsbreite zwischen 1,5 bis 10 mm auf eine sichtbare Endbreite zwischen 0 und 5 mm komprimiert werden.

6. Verfahren nach einem der Ansprüche 1 bis 5, **dadurch gekennzeichnet, dass** die wasserlöslichen Folienabschnitte des Boden- und Deckelelements auf Basis von Polyvinylalkohol gebildet sind und mindestens eine Schicht umfassen.

7. Verfahren nach einem der Ansprüche 1 bis 6, **dadurch gekennzeichnet, dass** das Bodenelement und das Deckelelement unter Einwirkung von Wasser und Druck oder Einwirkung von Wasser, Druck und Erwärmung auf Temperaturen unter 95 °C oder Einwirkung von Temperaturen oberhalb von 90 °C zu der Folienhülle (120) miteinander verbunden werden.

8. Verfahren nach einem der Ansprüche 1 bis 7, **dadurch gekennzeichnet, dass** der Druck durch bewegliche Pressflächen oder durch Förderung der Portionseinheit (1) entlang einer sich verengenden Förderstrecke aufgebracht wird.

9. Portionseinheit (1) eines Waschmittels, umfassend ein Aufnahmevolumen mit mehreren Kammern (10, 11), die voneinander getrennt sind, von einer wasserlöslichen Folienhülle (120) umhüllt und mit einer Waschmittelzusammensetzung (20, 21) gefüllt sind, **dadurch gekennzeichnet, dass** benachbarte Wandabschnitte (100, 110) benachbarter Kammern (10, 11) aneinander anliegen und miteinander verbunden sind.

10. Portionseinheit (1) nach Anspruch 9, **dadurch gekennzeichnet, dass** die Folie auf Basis von Polyvinylalkohol gebildet ist und ein- oder mehrschichtig ausgebildet ist.

## Claims

1. A method for producing a portion unit (1) of a detergent, comprising the following steps:
- inserting a base element made from a first water-soluble film portion into a deep-drawing mold so as to form a holding volume from the first water-soluble film portion, the holding volume comprising a plurality of chambers (10, 11) which are spaced apart from one another;
- pouring at least one detergent composition (20, 21) into the chambers (10, 11);
- placing a cover element made from a second water-soluble film portion onto the filled chambers (10, 11),
- connecting the cover element to the base element, thus enclosing the chambers (10, 11), so as to form a film wrapping (120), sealing seams (13, 14, 15, 16) being formed between adjacent wall portions (100, 110) of the chambers (10, 11);
- removing the portion unit (1) from the deep-drawing mold,
**characterized in that** the outside of the film wrapping (120) is subsequently wetted at least in the region of the adjacent wall portions (100, 110) and, by the exertion of pressure, the sealing seams (13, 14, 15, 16) are compressed and the adjacent wall portions (100, 110) are brought into contact with one another and interconnected.

2. The method according to claim 1, **characterized in that** the film wrapping (120) is wetted by spraying on a solvent, preferably water or an aqueous solution, applying a solvent mist, applying water vapor, or applying a liquid film by means of a stamp, damp rollers or damp brushes.

3. The method according to claim 1 or 2, **characterized in that** the portion unit (1) has between two and ten chambers (10, 11).

4. The method according to one of claims 1 to 3, **characterized in that** adjacent chambers (10, 11) have complementary convex and concave wall portions (100, 110).

5. The method according to one of claims 1 to 4, **characterized in that** the sealing seams (13, 14, 15, 16) are compressed from an initial width of between 1.5 and 10 mm to a visible final width of between 0 and 5 mm.

6. The method according to one of claims 1 to 5, **characterized in that** the water-soluble film portions of the base element and the cover element are formed on the basis of polyvinyl alcohol and comprise at least one layer.

7. The method according to one of claims 1 to 6, **characterized in that** the base element and the cover element are interconnected so as to form the film wrapping (120) under the action of water and pressure, under the action of water and pressure and heating to temperatures below 95 °C, or by exposure to temperatures above 90 °C.

8. The method according to one of claims 1 to 7, **characterized in that** the pressure is applied by movable pressing surfaces or by conveying the portion unit (1) along a narrowing conveying line.

9. A portion unit (1) of a detergent, comprising a holding volume having a plurality of chambers (10, 11) which are separate from one another, wrapped in a water-soluble film wrapping (120) and filled with a detergent composition (20, 21), **characterized in that** adjacent wall portions (100, 110) of adjacent chambers (10, 11) come into contact with one another and are interconnected.

10. The portion unit (1) according to claim 9, **characterized in that** the film is formed on the basis of polyvinyl alcohol and is formed in one or more layers.

## Revendications

1. Procédé de production d'une dose unitaire (1) d'un détergent, comprenant les étapes suivantes :
- insertion d'un élément de fond composé d'une première section de film soluble dans l'eau dans un moule d'emboutissage pour former un volume de réception à partir de la première section de film soluble dans l'eau, le volume de réception comprenant plusieurs compartiments (10, 11), lesquels sont espacés les uns des autres ;
- remplissage des compartiments (10, 11) d'au moins une composition de détergent (20, 21),
- pose d'un élément de recouvrement composé d'une seconde section de film soluble dans l'eau sur les compartiments (10, 11) remplis,
- liaison de l'élément de recouvrement à l'élément de fond, y compris les compartiments (10, 11), pour former une enveloppe de film (120), des joints scellés (13, 14, 15, 16) étant réalisés entre des sections de paroi (100, 110) adjacentes des compartiments (10, 11),
- extraction de la dose unitaire (1) du moule d'emboutissage,
**caractérisé en ce qu'**ensuite, au moins dans la zone des sections de paroi (100, 110) adjacentes, l'enveloppe de film (120) est humidifiée côté extérieur et les joints scellés (13, 14, 15, 16) sont comprimés par l'exercice de pression et les sections de paroi (100, 110) adjacentes sont amenées en appui les unes contre les autres et reliées entre elles.

2. Procédé selon la revendication 1, **caractérisé en ce que** l'humidification de l'enveloppe de film (120) est obtenue au moyen de la pulvérisation de solvant, de préférence d'eau ou d'une solution aqueuse, l'application d'un brouillard de solvant ou l'application de vapeur d'eau ou l'application d'un film de liquide au moyen d'un tampon, de rouleaux humides ou de brosses humides.

3. Procédé selon la revendication 1 ou 2, **caractérisé en ce que** la dose unitaire (1) présente deux à dix compartiments (10, 11).

4. Procédé selon l'une des revendications 1 à 3, **caractérisé en ce que** des compartiments (10, 11) adjacents présentent des sections de paroi (100, 110) convexes et concaves complémentaires l'une de l'autre.

5. Procédé selon l'une des revendications 1 à 4, **caractérisé en ce que** les joints scellés (13, 14, 15, 16) sont comprimés d'une largeur initiale comprise entre 1,5 à 10 mm à une largeur finale visible comprise entre 0 et 5 mm.

6. Procédé selon l'une des revendications 1 à 5, **caractérisé en ce que** les sections de film solubles dans l'eau des éléments de fond et de recouvrement sont formées à base d'alcool polyvinylique et comprennent au moins une couche.

7. Procédé selon l'une des revendications 1 à 6, **caractérisé en ce que** l'élément de fond et l'élément de recouvrement sont reliés l'un à l'autre sous l'action d'eau et de pression ou sous l'action d'eau, de pression et de chauffage à des températures inférieures à 95 °C ou sous l'action de températures supérieures à 90 °C pour former l'enveloppe de film (120).

8. Procédé selon l'une des revendications 1 à 7, **caractérisé en ce que** la pression est appliquée par des surfaces de pression mobiles ou par le déplacement de la dose unitaire (1) le long d'un trajet de transport se rétrécissant.

9. Dose unitaire (1) d'un détergent, comprenant un volume de réception comportant plusieurs compartiments (10, 11), lesquels sont séparés les uns des autres, enveloppés par une enveloppe de film (120) soluble dans l'eau et remplis d'une composition de détergent (20, 21), **caractérisée en ce que** des sections de paroi (100, 110) adjacentes de compartiments (10, 11) adjacents sont en appui les unes contre les autres et reliées les unes aux autres.

10. Dose unitaire (1) selon la revendication 9, **caractérisée en ce que** le film est formé à base d'alcool polyvinylique et est réalisé en une ou plusieurs couches.
